# FASCICULE DE BREVET EUROPEEN

(11) **EP 0 518 776 B1**
(45) Date de publication et mention de la délivrance du brevet: **04.10.1995**
(21) Numéro de dépôt: 92401631.4
(22) Date de dépôt: 12.06.1992
(51) Int. Cl.: B03B 9/06, C10L 5/48, C22B 1/00, F23K 3/00

(54) **Combustibles de substitution et leur procédé d'élaboration à partir de composés non métalliques issus du broyage d'automobiles**
Ersatzbrennstoffe und ihr Herstellungsverfahren hervorgehend aus nichtmetallischen Stoffen welche beim Schreddern von Autos anfallen
Substitute combustibles and method of manufacturing them from non-metallic compounds obtained by car crushing

(30) Priorité: 12.06.1991 FR 9107171
(43) Date de publication de la demande: 16.12.1992
(73) Titulaire: VALERCO, F-75012 Paris (FR)
(72) Inventeur: Del Vecchio, Jean-Marie, F-94420 Le Plessis Trevise (FR); Moine, Bernard, F-54000 Nancy (FR)
(74) Mandataire: Portal, Gérard

(56) Documents cités:
- DE-A- 2 420 836
- DE-A- 3 539 902
- DE-A- 3 932 366
- FR-A- 1 510 164
- FR-A- 2 373 469
- US-A- 4 726 530
- THYSSEN TECHNISCHE BERICHTE no. 2, 1986, DUISBURG DE pages 245 - 253; H. GÜNNEWIG: 'Recycling von Altautos'
- PATENT ABSTRACTS OF JAPAN vol. 12, no. 213 (C-505)(3060) 17 Juin 1988 & JP-A-63012390 (MITSUBISHI HEAVY IND. LTD)

## Description

La présente invention concerne de nouveaux combustibles de substitution et leur procédé d'élaboration à partir de composés non métalliques issus du broyage d'automobiles.

Dans une approche généralement suivie actuellement, les véhicules usagés sont broyés et soumis ensuite à des opérations de tris destinées à récupérer en particulier les métaux. Il reste alors une phase communément appelée "stériles" et représentant 25 à 30 % de l'épave constituée essentiellement de plastiques divers, de caoutchouc, de terre et de résidus métalliques. La solution utilisée actuellement pour se débarrasser de cette phase est de l'enfouir, en particulier dans des centres d'enfouissement de classe II.

L'augmentation du parc automobiles jointe au fait que la durée moyenne de vie de ces dernières est de dix ans a pour corollaire une augmentation considérable du nombre des épaves et par conséquent de la masse de stériles et, ce, d'autant plus que la proportion de matériaux non métalliques contenus dans les voitures augmente. Ceci rend nécessaire d'envisager de nouveaux moyens permettant à la fois de préserver l'environnement et de valoriser ce type de déchets.

Parmi les voies envisagées actuellement, on peut citer la transformation de ces "stériles" par pyrolyse, la gazéification à haute température, la glycolyse ou l'hydrolyse. Des transformations en combustibles ont également été envisagées.

Toutefois, aucune solution satisfaisante n'a pu être retenue actuellement, faute de pouvoir allier des impératifs de respect de l'environnement à des impératifs de viabilité économique.

Ainsi l'étude de H.GÜNNEWIG "Recycling von Altautos, p.245-253 dans THYSSEN TECHNISCHE BERICHTE, No 2, 1986, DUISBURG, décrit un procédé de valorisation de déchets d'automobiles consistant à les broyer et à les débarrasser de l'essentiel de la partie métallique qui les compose.

Ce procédé peut conduire en particulier à un produit utilisable comme combustible notamment en cimenterie, mais seulement comme substituant de 10-15 % du combustible habituel.

La demanderesse a maintenant mis au point un nouveau procédé particulièrement simple de traitement de ces déchets, donc économiquement viable, et permettant d'obtenir de nouveaux combustibles utilisables dans les industries grosses consommatrices d'énergie et en particulier dans les cimenteres.

On connaît déjà différents procédés permettant la valorisation des pneus usagés Ainsi, le brevet US 4 726 530 décrit un procédé de valorisation des pneus usés en vue de récupérer l'acier et les fibres et de convertir le caoutchouc en un produit valorisable, en particulier en fuel. Ce procédé décrit utilise différentes étapes de broyage et de récupération mais est limité à l'application aux pneus et ne révèle pas l'utilisation du combustible en cimenterie.

Un autre avantage du procédé mis au point par la demanderesse est que la même ligne de transformation pourra être utilisée dans des campagnes alternées pour le traitement des pneumatiques usagés de véhicules légers ou de poids lourds ou le traitement de déchets de caoutchoucs industriels.

La présente invention concerne donc un procédé permettant de valoriser le déchet constitué par les stériles d'automobiles en les transformant par un procédé particulièrement simple utilisant uniquement des étapes de broyage et de tri en des produits combustibles. Elle concerne également l'installation permettant la mise en oeuvre de ce procédé.

Elle concerne aussi les nouveaux combustibles obtenus, combustibles qui peuvent trouver un débouché dans les industries grosses consommatrices d'énergie et notamment dans les cimenteries.

Selon une caractéristique essentielle, le procédé de la présente invention concerne un procédé de préparation de combustibles à partir de composés essentiellement non métalliques résultant du broyage d'automobiles, caractérisé en ce qu'il consiste à cribler lesdits composés essentiellement non métalliques résultant du broyage d'automobiles pour retenir une fraction de granulométrie comprise entre 20 et 300 mm, à prébroyer ladite fraction, à éliminer la majorité des métaux magnétiques, puis à soumettre le produit débarrassé de la majorité des métaux magnétiques à une opération de fractionnement en fonction de la densité de ses constituants conduisant à une fraction dite fraction lourde (I) et à une fraction dite fraction légère (II), puis à soumettre la fraction légère (II) à des opérations destinés à la débarrasser des poussières pour récupérer un premier type de produit utilisable comme combustible et a soumettre la fraction lourde (I) à une opération destinée à la débarrasser des métaux non ferreux, puis à broyer le produit résultant et à le soumettre éventuellement à une opération de tri magnétique destinée à éliminer les métaux magnétiques résiduels et enfin à récupérer un deuxième type de produit utilisable comme combustible.

L'invention sera décrite plus complètement dans la description qui va suivre faite en référence aux figures.

La figure 1 représente schématiquement une installation type permettant de mettre en oeuvre le procédé de l'invention.

La figure 2 représente schématiquement un dispositif permettant le stockage et l'introduction du combustible provenant de la fraction légère et son introduction dans un four de cimenterie.

Le produit traité par le procédé de la présente invention représente en poids actuellement environ 25 % du poids des épaves d'automobiles broyées, le reste constitué essentiellement de métaux ferreux et non ferreux ayant été récupéré au cours des opérations classiques de broyage et de tri. Ce produit constitue ce qui est souvent appelé les "stériles" et que l'on désignera ici par "composés non métalliques issus du broyage des automobiles".

Bien entendu, étant donné l'évolution de la constitution des automobiles, la proportion des composés non métalliques issus du broyage des automobiles ainsi que leur composition sont susceptibles de changer. Actuellement, leur composition moyenne est la suivante : minéraux fins (39 %), mousses (21 %), métaux (3,5 %), polymères (7,3 %), caoutchouc (20 % dont une partie combinée avec des métaux ferreux), tissus et papiers (6 %), fils électriques (1,5 %). Ces stériles ont une granulométrie comprise entre 0 et 300 mm.

La première phase du procédé de l'invention consiste à faire subir à ces composés non métalliques issus du broyage des automobiles une première opération de criblage destinée à éliminer les particules fines de diamètre inférieur à 20 mm.

Cette fraction éliminée sera soit enfouie dans des centres d'enfouissage de classe III, soit éventuellement valorisée en technique routière.

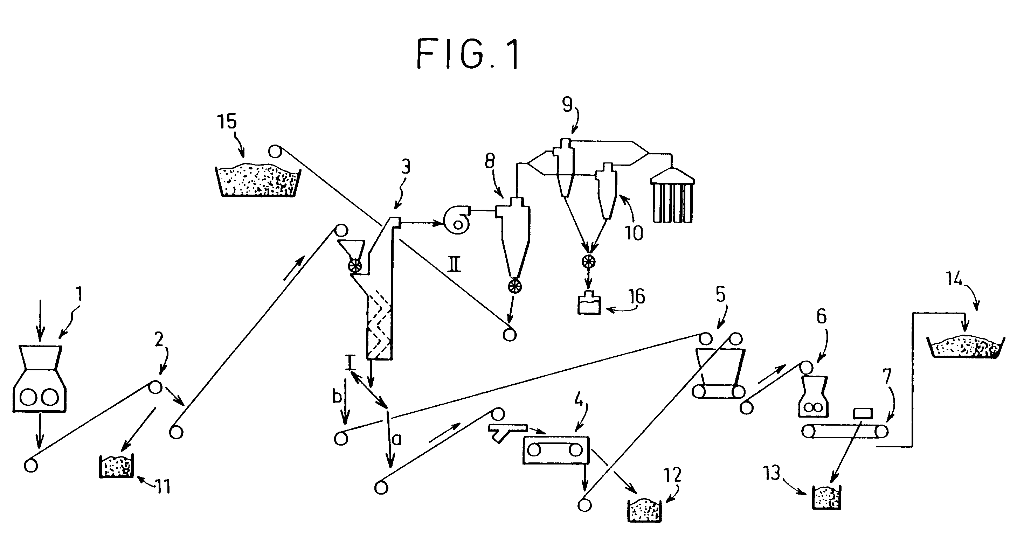

C'est la fraction de granulométrie 20-300 mm qui est traitée dans l'installation représentée schématiquement sur la figure 1. On la désignera par la suite par RBA. Cette fraction représente 70 % environ des composés non métalliques issus du broyage d'automobiles traités. Le produit subit une première étape de prébroyage pour l'amener à une granulométrie inférieure à 20 mm. Cette étape est avantageusement réalisée dans un prébroyeur (1) du type rotor à lame.

Le produit broyé est ensuite soumis à une étape magnétique. Cette étape est avantageusement réalisée sur un dispositif (2) de type tambour magnétique. Au cours de cette étape, on élimine la majorité du fer, en particulier le fer non lié à du caoutchouc. La fraction éliminée lors de cette étape et récupérée en (11) représente environ 5 à 10 % des RBA traités.

Le reste est ensuite conduit vers un dispositif (3) permettant de réaliser un fractionnement du produit en fonction de la densité des constituants. Avantageusement, ce dispositif (3) sera constitué d'un dispositif à cascade et complété par des cyclones (8, 9, 10) destinés à éliminer les poussières contenues dans la fraction légère.

On récupère à la sortie du dispositif à cascade une fraction (I) ou fraction lourde et une fraction (II) ou fraction légère.

Les deux fractions (I) et (II) représentent avantageusement chacune de 45 à 52 % en poids par rapport aux RBA initiaux introduits en (1).

La fraction (II) est ensuite traitée dans différentes étapes de cyclonage pour éliminer les poussières en (16) et récuen (15) un produit directement utilisable comme combustible.

Dans le dispositif représenté sur la figure 1, on a représenté un dispositif comprenant plusieurs étages d'élimination des poussières. Il est bien évident pour l'homme du métier qu'on peut concevoir d'autres dispositifs permettant d'éliminer les poussières et de récupérer un produit valorisable comme combustible.

La fraction (I) est ensuite soumise, comme indiqué selon la flèche (a) en (4), à une opération destinée à éliminer les métaux non ferreux récupérés en (12). Cette fraction constituée essentiellement de métaux non ferreux représente environ de 1,5 à 4 % en poids par rapport aux RBA introduits en (1). L'élimination des métaux non ferreux est avantageusement réalisée dans un dispositif utilisant un circuit inducteur, de préférence un appareil de type ANDRIN SMA400.

A la sortie du dispositif (4) et, après élimination des métaux non ferreux, on obtient un produit constitué essentiellement de caoutchouc, polymères et matières plastiques qui peut être stocké intermédiairement comme représenté en (5) sur la figure dans une trémie-tampon. Le produit subit ensuite une étape de broyage, par exemple dans un granulateur du type granulateur à couteaux pour obtenir des particules inférieures à 5 mm.

Le produit sortant du granulateur est ensuite soumis à une opération de tri magnétique en (7) destinée à éliminer les métaux ferreux résiduels. Cette opération sera avantageusement effectuée en utilisant un dispositif de type overband.

Les métaux ferreux résiduels sont récupérés en (13), tandis que le produit final est stocké en (14).

Le produit récupéré en (14) constitue un deuxième type combustible selon l'invention.

Comme on l'a dit précédemment, l'invention concerne également les produits résultant du procédé de l'invention décrit ci-dessus et, en particulier les produits récupérés en (14) et (15) qui constituent des combustibles utilisables dans des industries grosses consommatrices d'énergie du fait en particulier de leur pouvoir calorifique.

En effet, la fraction lourde (I) conduit à un combustible présentant un pouvoir calorifique inférieur (PCI) d'environ 8 000 à 9 000 kcal/kg (33,448.10⁶ à 37,629.10⁶ J/kg) et la fraction légère (II) à un combustible dont le PCI est de l'ordre de 3 500 à 4 500 kcal/kg (14,6335.10⁶ à 18,8145.10⁶ J/kg).

Ils sont tout particulièrement utilisables en cimenteries où l'on trouve, du fait de la température élevée de flamme, de la durée de séjour des gaz, de l'ambiance oxydante et du contact intime avec un milieu basique, des conditions optimales pour une épuration efficace.

La réception de la fraction légère dans l'usine utilisatrice type cimenterie est faite dans un silo, ou trémie, ou réceptacle divers équipé spécialement pour tenir compte de la nature de cette fraction légère et permettant d'assurer l'extraction de ce réceptacle en évitant la formation de voûte.

A cet effet, le réceptacle est avantageusement équipé d'un dispositif permettant le foisonnement du produit et son introduction dans une vis doseuse.

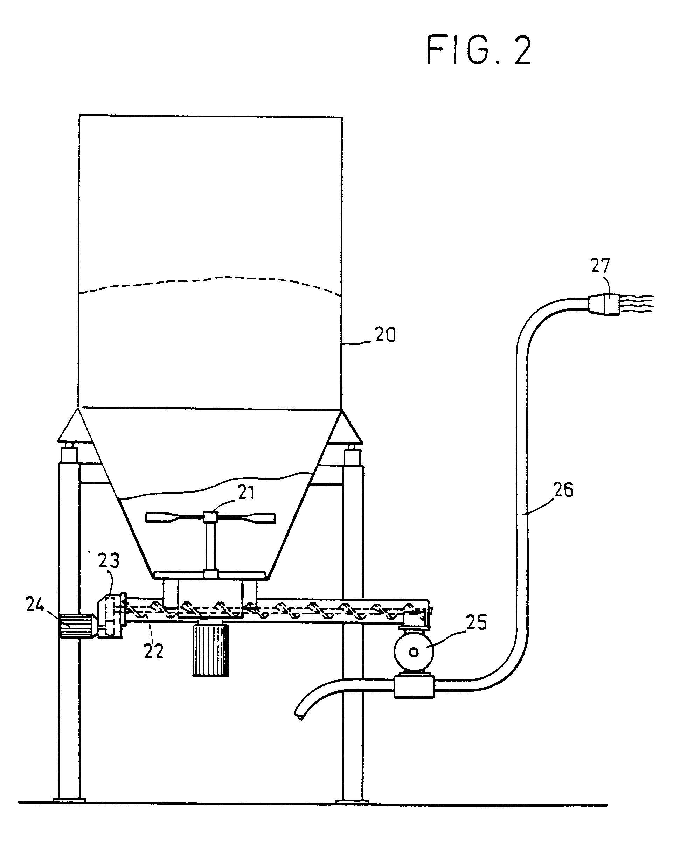

La figure 2 représente un exemple de dispositif permettant l'introduction du combustible issu de la phase légère II dans un four.

Il apparaît sur la figure 2 que le réceptacle (20) du combustible issu de la phase légère et provenant du stockage (15) représenté à la fiugre 1 est équipé à sa base d'un dispositif (21) assurant le foisonnement du combustible à la base du réceptacle (20).

Ce dispositif 21 est constitué d'un bras mobile qui tourne sur une sole située au fond du réceptacle. Ce bras crée un foisonnement local du produit contenu dans le réceptacle et le produit foisonné peut tomber par un orifice situé au fond du réceptacle sans tassement dans un engin d'extraction, par exemple une vis sans fin (22), situé à l'extérieur du réceptacle proprement dit. Le procédé évite la formation de "bouchon" dans la ligne d'évacuation du produit.

Le groupe motoréducteur (23, 24) permet de faire varier la fréquence de rotation de la vis sans fin.

Le produit sortant de la vis sans fin (22) peut être stocké dans un sas intermédiaire (25) avant d'être introduit par l'intermédiaire de la tuyauterie (26) qui est alimentée en air comprimé et permet d'amener le produit avec la vitesse requise vers la tuyère (27) d'introduction du combustible dans le four.

Aucun aménagement particulier du réceptacle du combustible issu de la fraction lourde n'est nécessaire. Comme le combustible issu de la fraction légère, celui issu de la fraction lourde, après avoir reçu une certaine vitesse après son extraction du réceptacle, est envoyé par une tuyère dans le four de cimenterie au capot de chauffe et brûle alors, les résidus stériles se combinant à la matière qui se transforme dans le four de cimenterie.

En cimenterie, les deux types de combustibles peuvent être utilisés au capot de chauffe, c'est-à-dire dans la zone la plus chaude du four ou en des points particuliers du four (grille, précalcinateur).

Un avantage supplémentaire du dispositif précédemment décrit pour la préparation de combustibles à partir de RBA est qu'il peut sans adaptation particulière être utilisé également pour la préparation de combustibles à partir de pneumatiques usagés.

Dans ce cas, étant donné la nature du produit traité, on introduira directement les pneumatiques usagés dans le prébroyeur (1). Par ailleurs, il sera, comme indiqué sur la flèche (b), inutile de faire passer le produit (I) dans le dispositif (4) et l'on pourra l'envoyer directement dans le granulateur (6) après stockage intermédiaire éventuel dans la trémie-tampon (5).

La même installation pourra également avantageusement être utilisée, par exemple entre deux campagnes de traitement de déchets d'automobiles pour traiter des déchets divers de caoutchoucs industriels en vue de leur transformation en combustibles de substitution.

Bien entendu dans ces cas, les fractions légères et lourdes seront dans des proportions différentes de celles données précédemment pour le cas des RBA. La poudrette obtenue pourra être avantageusement utilisée comme combustibles de substitution, notamment en cimenterie.

## Revendications

1. Procédé de préparation de combustibles à partir de composés essentiellement non métalliques résultant du broyage d'automobiles, caractérisé en ce qu'il consiste à cribler lesdits composes essentiellement non métalliques résultant du broyage d'automobiles pour retenir une fraction de granulométrie comprise entre 20 et 300 mm, à prébroyer ladite fraction, à éliminer la majorité des métaux magnétiques, puis à soumettre le produit débarrassé de la majorité des métaux magnétiques à une opération de fractionnement en fonction de la densité de ses constituants conduisant à une fraction dite fraction lourde (I) et à une fraction dite fraction légère (II), puis à soumettre la fraction légère (II) à des opérations destinées à la débarrasser des poussières pour récupérer un premier type de produit utilisable comme combustible et à soumettre la fraction lourde (I) à une opération destinée à la débarrasser des métaux non ferreux, puis à broyer le produit résultant et à le soumettre éventuellement à une opération de tri magnétique destinée à éliminer les métaux magnétiques résiduels et enfin à récupérer un deuxième type de produit utilisable comme combustible.

2. Procédé selon la revendication 1, caractérisé en ce que la granulométrie moyenne du produit après l'étape de prébroyage est inférieure à 20 mm.

3. Procédé selon la revendication 1 ou 2, caractérisé en ce que les fractions légère (I) et lourde (II) représentent chacune de 45 à 52 % par rapport au poids du produit récupéré à l'issue de la phase de criblage.

4. Procédé selon l'une des revendications 1 à 3, caractérisé en ce qu'il comprend en outre des étapes de stockage des produits combustibles issus des fractions lourde (I) et légère (II) en vue de leur introduction comme combustible dans un four.

5. Procédé selon l'une des revendications 1 à 4, caractérisé en ce que le combustible provenant de la fraction légère (II) est soumis à une étape de foisonnement dans une partie de son volume et d'extraction du produit soumis audit foisonnement avant d'être envoyé vers le four de combustion.

6. Installation pour la mise en oeuvre du procédé selon l'une des revendications 1 à 5, caractérisée en ce qu'elle comprend des moyens de criblage permettant de récupérer un produit de granulométrie comprise entre 20 et 300 mm à partir de composés essentiellement non métalliques issus du broyage d'automobiles dont la granulométrie est comprise entre 0 et 300 mm, des moyens de prébroyage (1) des résidus issus de l'étape précédente de criblage, des moyens (2) d'élimination de la majorité des matériaux ferreux, en particulier des matériaux ferreux non liés à du caoutchouc, des moyens (3) permettant de fractionner le produit en deux fractions en fonction de la densité de leurs constituants, des moyens (8, 9, 10) de purification de la fraction légère, des moyens (4) d'élimination des métaux non ferreux de la fraction lourde, des moyens (6) de granulation de la fraction lourde débarrassée des métaux non ferreux, des moyens (7) de tri magnétique du produit granulé, des moyens de récupération (14, 15) des combustibles.

7. Installation selon la revendication 6, caractérisée en ce que le prébroyeur (1) est un prébroyeur du type rotor à lame.

8. Installation selon l'une des revendications 6 ou 7, caractérisée en ce que les moyens (2) d'élimination des matériaux ferreux sont constitués par un tambour magnétique.

9. Installation selon l'une des revendications 6 à 8, caractérisée en ce que les moyens (3) de fractionnement sont constitués par un dispositif à cascade.

10. Installation selon l'une des revendications 6 à 9, caractérisée en ce que les moyens (4) d'élimination des métaux non ferreux sont constitués par un dispositif comprenant un circuit inducteur.

11. Installation selon l'une des revendications 6 à 10, caractérisée en ce que les moyens de granulation (6) sont constitués par un granulateur de type à couteaux.

12. Installation selon l'une des revendications 6 à 11, caractérisée en ce que les moyens de tri magnétique (7) sont constitués par un dispositif de type overband.

13. Installation pour la mise en oeuvre du procédé selon les revendications 4 ou 5, caractérisée en ce qu'elle comprend en outre des moyens de stockage du (ou des) combustibles et d'introduction du (ou des) combustibles dans le four de combustion.

14. Installation selon la revendication 13, caractérisée en ce que les moyens de stockage et d'introduction du combustible provenant de la fraction légère (II) sont constitués d'un réceptacle (20) présentant une ouverture à sa base et équipé à sa base de moyens (21) de foisonnement du combustible, de moyens d'extraction (22) dudit combustible préalablement foisonné et des moyens (26) destinés à conduire le combustible avec la vitesse requise vers une tuyère (27) d'introduction de ce dernier vers le four de combustion.

15. Installation selon la revendication 14, caractérisée en ce que les moyens de foisonnement (21) sont constitués par un bras mobile.

16. Installation selon la revendication 14 ou 15, caractérisée en ce que les moyens d'extraction (22) sont constitués par une vis sans fin.

17. Utilisation des combustibles obtenus à partir des composants essentiellement non mételliques issus du broyage d'automobiles par le procédé selon l'une des revendications 1 à 5 ou en utilisant l'installation selon l'une des revendications 6 à 16 comme combustibles de substitution dans les industries grosses consommatrices d'énergie, notamment en cimenterie.

## Claims

1. Method for preparing fuels from essentially non-metallic compounds resulting from the crushing of cars, characterized in that it consists in sifting said essentially non-metallic compounds resulting from car crushing to retain a fraction of granulometry included between 20 and 300 mm, in pre-crushing said fraction, in eliminating the majority of the magnetic metals, then subjecting the product from which the majority of magnetic metals has been removed to an operation of fractioning as a function of the density of its constituents leading to a so-called heavy fraction (I) and to a so-called light fraction (II), then in subjecting the light fraction (II) to operations intended to remove dust therefrom to recover a first type of product usable as fuel and in subjecting the heavy fraction (I) to an operation intended to remove therefrom the non-ferrous metals, then in crushing the resulting product and possibly subjecting it to a magnetic sorting operation intended to eliminate the residual magnetic metals and finally in recovering a second type of product usable as fuel.

2. Method according to Claim 1, characterized in that the mean granulometry of the product after the pre-crushing step is less than 20 mm.

3. Method according to Claim 1 or 2, characterized in that the light (I) and heavy (II) fractions each represent from 45 to 52% with respect to the weight of the product recovered at the end of the sifting phase.

4. Method according to one of Claims 1 to 3, characterized in that it further comprises steps of storing the fuel products issuing from the heavy (I) and light (II) fractions with a view to introducing it as fuel in a furnace.

5. Method according to one of Claims 1 to 4, characterized in that the fuel coming from the light fraction (II) is subjected to a step of swelling in a part of its volume and of extraction of the product subjected to said swell before being sent towards the combustion furnace.

6. Installation for carrying out the method according to one of Claims 1 to 5, characterized in that it comprises sifting means making it possible to recover a product of granulometry included between 20 and 300 mm from essentially non-metallic compounds issuing from the crushing of cars, of which the granulometry is included between 0 and 300 mm, means (1) for pre-crushing the residues issuing from the preceding sifting step, means (2) for eliminating the majority of the ferrous materials, particularly ferrous materials not bonded to rubber, means (3) for fractioning the product into two fractions as a function of the density of their constituents, means (8, 9, 10) for purifying the light fraction, means (4) for eliminating the non-ferrous metals from the heavy fraction, means (6) for granulation of the heavy fraction from which the non-ferrous metals have been removed, means (7) for magnetic sorting of the granulated product, means (14, 15) for recovering the fuels.

7. Installation according to Claim 6, characterized in that the pre-crusher (1) is a pre-crusher of the bladedrotor type.

8. Installation according to one of Claims 6 or 7, characterized in that the means (2) for eliminating the ferrous materials are constituted by a magnetic drum.

9. Installation according to one of Claims 6 to 8, characterized in that the fractioning means (3) are constituted by a cascade device.

10. Installation according to one of Claims 6 to 9, characterized in that the means (4) for eliminating the non-ferrous metals are constituted by a device comprising an inductor circuit.

11. Installation according to one of Claims 6 to 10, characterized in that the granulation means (6) are constituted by a granulator of the type with knives.

12. Installation according to one of Claims 6 to 11, characterized in that the magnetic sorting means (7) are constituted by a device of overband type.

13. Installation for carrying out the method according to Claims 4 or 5, characterized in that it further comprises means for storing the fuel or fuels and for introducing the fuel or fuels in the combustion furnace.

14. Installation according to Claim 13, characterized in that the means for storing and introducing the fuel coming from the light fraction (II) are constituted by a receptacle (20) presenting an opening at its base and equipped at its base with means (21) for swelling the fuel, means (22) for extracting said previously swollen fuel and means (26) intended to conduct the fuel at the required velocity towards a nozzle (27) for introduction thereof towards the combustion furnace.

15. Installation according to Claim 14, characterized in that the swelling means (21) are constituted by a mobile arm.

16. Installation according to Claim 14 or 15, characterized in that the extraction means (22) are constituted by an endless screw.

17. Use of the fuels obtained from the essentially non-metallic components issuing from the crushing of cars by the method according to one of Claims 1 to 5 or using the installation according to one of Claims 6 to 16, as substitute fuels in high energy consuming industries, particularly in cement works.

## Patentansprüche

1. Verfahren zur Herstellung von Brennmaterialien (Brennstoffen) aus im wesentlichen nicht-metallischen Verbindungen, die beim Zerkleinern (Zermalmen) von Automobilen erhalten werden, dadurch gekennzeichnet, daß es darin besteht, daß die genannten, im wesentlichen nicht-metallischen Verbindungen, die beim Zermalmen (Zerkleinern) von Automobilen erhalten werden, aufgetrennt (klassiert) werden unter Zurückbehaltung einer ersten Fraktion mit einer Korngröße zwischen 20 und 300 mm, die genannte Fraktion vorzerkleinert wird, die Mehrzahl der magnetischen Metalle eliminiert wird, dann das von der Mehrzahl der magnetischen Metalle befreite Produkt als Funktion der Dichte seiner Bestandteile fraktioniert wird unter Zurückbehaltung einer sogenannten schweren Fraktion (I) und einer sogenannten leichten Fraktion (II), dann die leichte Fraktion (II) Behandlungen unterworfen wird, um Stäube daraus zu entfernen, unter Bildung eines Produkts vom ersten Typ, das als Brennmaterial verwendbar ist, und die schwere Fraktion (I) einer Behandlung unterworfen wird, um sie von Nicht-Eisen-Metallen zu befreien, dann das resultierende Produkt zerkleinert (gemahlen) und gegebenenfalls einer magnetischen Sortierung unterworfen wird, um die restlichen magnetischen Metalle zu eliminieren, und schließlich ein Produkt vom zweiten Typ gewonnen wird, das als Brennmaterial (Brennstoff) verwendbar ist.

2. Verfahren nach Anspruch 1, dadurch gekennzeichnet, daß die mittlere Korngröße des Produkts nach der Vorzerkleinerungsstufe unterhalb 20 mm liegt.

3. Verfahren nach Anspruch 1 oder 2, dadurch gekennzeichnet, daß die leichte Fraktion (II) und die schwere Fraktion (I) jeweils 45 bis 52 %, bezogen auf das Gewicht des am Ende der Klassierungsphase gewonnenen Produkts, ausmachen.

4. Verfahren nach einem der Ansprüche 1 bis 3, dadurch gekennzeichnet, daß es außerdem Stufen zur Lagerung der brennbaren Produkte umfaßt, die aus der schweren Fraktion (I) und aus der leichten Fraktion (II) stammen, um sie als Brennmaterial in einen Ofen einzuführen.

5. Verfahren nach einem der Ansprüche 1 bis 4, dadurch gekennzeichnet, daß das Brennmaterial, das aus der leichten Fraktion (II) stammt, einer Stufe der Auflockerung (Volumenvermehrung) eines Teils seines Volumens und der Extraktion des der Auflockerung unterworfenen Produkts unterworfen wird, bevor es in den Verbrennungsofen eingeführt wird.

6. Vorrichtung (Anlage) zur Durchführung des Verfahrens nach einem der Ansprüche 1 bis 5, dadurch gekennzeichnet, daß sie umfaßt Sortierungs- bzw. Trenneinrichtungen, welche die Abtrennung eines Produkts mit einer Teilchengröße zwischen 20 und 300 mm erlaubt, ausgehend von im wesentlichen Nicht-Metall-Verbindungen, die aus der Zerkleinerung (Zermalmung) von Automobilen stammen, deren Korngröße zwischen 0 und 300 mm liegt, Einrichtungen (1) zur Vorzerkleinerung der Rückstände, die aus der vorhergehenden Sortierungsstufe stammen, Einrichtungen (2) zur Eliminierung der Mehrzahl der Eisenmetalle, insbesondere der Eisenmetalle, die nicht an Kautschuk gebunden sind, Einrichtungen (3), welche die Fraktionierung des Produkts in zwei Fraktionen als Funktion der Dichte ihrer Bestandteile erlauben, Einrichtungen (8, 9, 10) zur Reinigung der leichten Fraktion, Einrichtungen (4) zur Eliminierung der Nicht-Eisenmetalle aus der schweren Fraktion, Einrichtungen (6) zur Granulierung der schweren Fraktion, die von Nicht-Eisenmetallen befreit ist, Einrichtungen (7) zur magnetischen Sortierung (Klassierung) des granulierten Produkts und Einrichtungen (14, 15) zur Abtrennung (Gewinnung) der Brennmaterialien.

7. Vorrichtung nach Anspruch 6, dadurch gekennzeichnet, daß die Vormahleinrichtung (1) eine Vormahleinrichtung vom Klingenrotor-Typ ist.

8. Vorrichtung nach einem der Ansprüche 6 oder 7, dadurch gekennzeichnet, daß die Einrichtungen (2) der Eliminierung der Eisenmaterialien aus einer magnetischen Trommel bestehen.

9. Vorrichtung nach einem der Ansprüche 6 bis 8, dadurch gekennzeichnet, daß die Einrichtungen (3) zur Fraktionierung aus einer Kaskaden-Einrichtung bestehen.

10. Vorrichtung nach einem der Ansprüche 6 bis 9, dadurch gekennzeichnet, daß die Einrichtungen (4) zur Eliminierung der Nicht-Eisenmetalle aus einer Einrichtung bestehen, die einen Induktionskreis enthält.

11. Vorrichtung nach einem der Ansprüche 6 bis 10, dadurch gekennzeichnet, daß die Einrichtungen zur Granulierung (6) aus einem Granulator vom Messer-Typ bestehen.

12. Vorrichtung nach einem der Ansprüche 6 bis 11, dadurch gekennzeichnet, daß die Einrichtungen zur magnetischen Sortierung (7) aus einer Einrichtung vom Overband-Typ bestehen.

13. Vorrichtung zur Durchführung das Verfahren nach einem der Ansprüche 4 oder 5, dadurch gekennzeichnet, daß sie außerdem Einrichtung zur Lagerung des (oder der) Brennmaterials (Brennmaterialien) und zur Einführung des (oder der) Brennmaterials (Brennmaterialien) in den Verbrennungsofen umfaßt.

14. Vorrichtung nach Anspruch 13, dadurch gekennzeichnet, daß die Einrichtungen zur Lagerung und Einführung des Brennmaterials, das aus der leichten Fraktion (II) stammt, aus einem Behälter (20) bestehen, der an seiner Basis eine Öffnung aufweist und der an seiner Basis ausgestattet ist mit Einrichtungen (21) zur Auflockerung (Volumenvermehrung) des Brennmaterials, mit Einrichtungen zur Extraktion (22) des genannten, vorher aufgelockerten Brennmaterials und mit Einrichtungen (26) zur Einführung des Brennmaterials mit der erforderlichen Geschwindigkeit in eine Düse (27) zur Einführung des Brennmaterials in den Verbrennungsofen.

15. Vorrichtung nach Anspruch 14, dadurch gekennzeichnet, daß die Einrichtungen zur Auflockerung (21) aus einem beweglichen Arm bestehen.

16. Vorrichtung nach Anspruch 14 oder 15, dadurch gekennzeichnet, daß die Einrichtungen zur Extraktion (22) aus einer Endlos-Schraube bestehen.

17. Verwendung der Brennmaterialien, die aus den im wesentlichen nicht-metallischen Bestandteilen, die aus der Zermalmung (Zerkleinerung) von Automobilen nach dem Verfahren nach einem der Ansprüche 1 bis 5 stammen oder durch Verwendung der Vorrichtung nach einem der Ansprüche 6 bis 16 erhalten werden, als Ersatz-Brennmaterialien(-Brennstoffe) in der Großindustrie mit hohem Energieverbrauch, insbesondere in der Zementindustrie.
